# EUROPEAN PATENT APPLICATION

(11) **EP 4 800 538 A1**
(43) Date of publication of application: **02.09.2026**
(21) Application number: 25817739.3
(22) Date of filing: 10.12.2025
(51) Int. Cl.: G06F 3/14, G06F 1/32, G06F 12/02

(54) **ELECTRONIC DEVICE FOR DISPLAYING CONTENT, OPERATION METHOD THEREOF, AND STORAGE MEDIUM**

(30) Priority: 17.01.2025 KR 20250007129; 10.03.2025 KR 20250030418
(71) Applicant: Samsung Electronics Co., Ltd., Suwon-si, Gyeonggi-do 16677 (KR)
(72) Inventor: KIM, Minwoo, Suwon-si Gyeonggi-do 16677 (KR)
(74) Representative: Appleyard Lees IP LLP
(86) International application number: PCT/KR2025/021212
(87) International publication number: WO 2026/155387

(57) **Abstract**

According to an embodiment, an electronic device (201) may comprise a display (210), first memory (221) with a first characteristic, second memory (223) with a second characteristic different from the first characteristic, an application processor (231) configured to determine a memory area to store image data corresponding to an application among the first memory (221) or the second memory (223), and an offloading processor (233). The offloading processor (233) may be configured to identify an event for displaying a plurality of objects including a first object and a second object. The offloading processor (233) may be configured to, based on a memory address corresponding to the first object, display, through the display (210), the first object stored in the first memory (221). The offloading processor (233) may be configured to, based on a memory address corresponding to the second object, display, through the display (210), the second object stored in the second memory (223).

## Description

### [Technical Field]

Embodiments of the disclosure relate to an electronic device for displaying content, and an operating method and storage medium thereof.

### [Background Art]

With the remarkable development of information and communication technology and semiconductor technology, the distribution and use of various electronic devices are rapidly increasing. Electronic devices are being developed so that a user may carry and communicate. An electronic device may mean a device which performs a specific function according to an installed program, such as a mobile communication terminal, a tablet PC, a video/acoustic device, a desktop/laptop computer, a vehicle navigation device, or a wearable device.

The electronic device may be composed of two aspects of hardware and software. In terms of hardware, the electronic device may include a processor (a CPU or an SOC) for calculating and processing a process, and memory in which data for the process is loaded. In terms of software, the electronic device may include an operating system (or a kernel) which performs basic management of a system, and an application which drives and executes the process on the operating system. For example, the processor (the CPU) loads data corresponding to the operating system into the memory to execute the data, and loads the application into the memory while the operating system is being executed and executes the application on the operating system, thereby the process is finally performed by execution of the application.

Recently, as the electronic device provides various services, the electronic device may include various applications, and as multiple applications are executed simultaneously, management of memory in which an application is loaded and executed has also become important. The electronic device includes at least one memory having different operating characteristics.

### [Detailed Description of the Invention]

### [Technical Solution]

According to an embodiment of the disclosure, an electronic device may comprise a display, first memory with a first characteristic, second memory with a second characteristic different from the first characteristic, an application processor configured to determine a memory area to store image data corresponding to an application among the first memory or the second memory, and an offloading processor.

According to an embodiment of the disclosure, the offloading processor may be configured to identify an event for displaying a plurality of objects including a first object and a second object.

According to an embodiment of the disclosure, the offloading processor may be configured to, based on a memory address corresponding to the first object, display, through the display, the first object stored in the first memory.

According to an embodiment of the disclosure, the offloading processor may be configured to, based on a memory address corresponding to the second object, display, through the display, the second object stored in the second memory.

The application processor may be configured to, based at least in part on an access property of the image data, determine the memory area.

The offloading processor may be configured to provide the image data to the display instead of the application processor, such that the image data is displayed, at least temporarily, through the display while the electronic device operates in a power saving mode.

The application processor may be configured to: identify at least one of a size of the image data, a task property for the image data, or an access frequency for the image data as the access property, based at least in part on that the access property corresponds to a first access frequency, determine the first memory as the memory area to store the image data, and based at least in part on that the access property corresponds to a second access frequency, determine the second memory as the memory area to store the image data.

The offloading processor may be configured to: in case that the power saving mode corresponds to a first power saving mode, based on activating the first memory and the second memory, display, through the display, a plurality of objects corresponding to the image data, in case that the power saving mode corresponds to a second power saving mode, based on activating the first memory and deactivating the second memory, display, through the display, the plurality of objects corresponding to the image data, and in case that the power saving mode corresponds to a third power saving mode, based on deactivating the first memory and activating the second memory, display, through the display, the plurality of objects corresponding to the image data.

The application processor may be configured to: based on occurrence of an event for setting a screen displayed in a power saving mode, store image data corresponding to a set screen in the memory area, and provide the offloading processor with address information corresponding to the memory area such that the offloading processor accesses the image data stored in the first memory or the second memory. The first characteristic of the first memory and the second characteristic of the second memory, respectively, may include a first power consumption characteristic and a second power consumption characteristic different from the first power consumption characteristic, and the application processor may be configured to: based at least in part on the first power consumption characteristic or the second power consumption characteristic, perform an operation of determining the memory area.

The application processor may be configured to: further based on first power consumption and second power consumption estimated to be consumed by the first memory and the second memory, respectively, for accessing the memory area storing the image data, perform an operation of determining the memory area.

Operating power consumption of the first memory may correspond to first operating power consumption, and operating power consumption of the second memory may correspond to second operating power consumption less than the first operating power consumption. Idle power consumption of the first memory may correspond to first idle power consumption, and idle power consumption of the second memory may correspond to second idle power consumption greater than the first idle power consumption.

An access speed of the first memory may correspond to a first access speed, and wherein an access speed of the second memory may correspond to a second access speed higher than the first access speed.

The application processor may form at least a part of a first chip, and the offloading processor may form at least a part of a second chip separate from the first chip, the first memory may be disposed outside the first chip and the second chip, and the second memory may be disposed inside the second chip.

The display may further include display driver integrated circuitry (DDI), and the second chip may be formed separately from the DDI.

The second chip may form at least a part of a display driver integrated circuitry (DDI).

According to an embodiment of the disclosure, a method of an electronic device may comprise identifying, by an offloading processor of the electronic device, an event for displaying a plurality of objects including a first object and a second object.

According to an embodiment of the disclosure, the method may comprise, based on a memory address corresponding to the first object, displaying, by the offloading processor, the first object stored in first memory of the electronic device through a display of the electronic device.

According to an embodiment of the disclosure, the method may comprise, based on a memory address corresponding to the second object, displaying, by the offloading processor, the second object stored in a second memory of the electronic device through the display.

The method may further comprise: based at least in part on an access property of the image data, determining, by the application processor, the memory area.

The method may further comprise: providing, by the offloading processor, the image data to the display instead of the application processor such that the image data is displayed, at least temporarily, through the display while the electronic device operates in a power saving mode.

The method may further comprise: based on occurrence of an event for setting a screen displayed in a power saving mode, storing, by the application processor, image data corresponding to a set screen in the memory area; and providing, by the application processor, address information corresponding to the memory area to the offloading processor such that the offloading processor accesses the image data stored in the first memory or the second memory.

According to an embodiment of the disclosure, a storage medium storing computer-readable instructions may be provided.

According to an embodiment of the disclosure, the instructions, when executed by an application processor including processing circuitry of an electronic device , may cause the electronic device to perform at least one operation.

According to an embodiment of the disclosure, the at least one operation may comprise identifying an event for displaying a plurality of objects including a first object and a second object.

According to an embodiment of the disclosure, the at least one operation may comprise, based on a memory address corresponding to the first object, displaying the first object stored in first memory of the electronic device through a display of the electronic device.

According to an embodiment of the disclosure, the at least one operation may comprise, based on a memory address corresponding to the second object, displaying the second object stored in a second memory of the electronic device through the display.

According to an embodiment of the disclosure, an electronic device may comprise a display, first memory, second memory, an application processor, and an offloading processor.

According to an embodiment of the disclosure, storage capacity of the second memory may be less than storage capacity of the first memory.

According to an embodiment of the disclosure, the application processor may be configured to identify information associated with power consumption of the first memory and the second memory.

According to an embodiment of the disclosure, the application processor may be configured to, based on information associated with the power consumption of the first memory and the second memory, identify a memory area in which a plurality of objects displayed in a low power state are stored among the first memory and the second memory.

According to an embodiment of the disclosure, the application processor may be configured to store the plurality of objects in the identified memory area.

According to an embodiment of the disclosure, the offloading processor may be configured to, based on information associated with the plurality of stored objects, display the plurality of objects through the display in the low power state.

According to an embodiment of the disclosure, an electronic device comprises; a display; first memory; second memory, wherein storage capacity of the second memory is less than storage capacity of the first memory; an application processor; and an offloading processor, wherein the application processor is configured to: identify information associated with power consumption of the first memory and the second memory, based on information associated with the power consumption of the first memory and the second memory, identify a memory area in which a plurality of objects displayed in a low power state are stored among the first memory and the second memory, and store the plurality of objects in the identified memory area, and wherein the offloading processor is configured to, based on information associated with the plurality of stored objects, display the plurality of objects through the display in the low power state. According to an embodiment of the disclosure, a method of an electronic device may comprise identifying, by an application processor of electronic device, information associated with power consumption of first memory of the electronic device and second memory of the electronic device.

According to an embodiment of the disclosure, the method may comprise, based on information associated with the power consumption of the first memory and the second memory, identifying, by the application processor, a memory area in which a plurality of objects displayed in a low power state are stored among the first memory and the second memory.

According to an embodiment of the disclosure, the method may comprise storing, by the application processor, the plurality of objects in the identified memory area.

According to an embodiment of the disclosure, the method may comprise, based on information associated with the plurality of stored objects, displaying, by an offloading processor of the electronic device, the plurality of objects through a display of the electronic device.

According to an embodiment of the disclosure, a storage medium storing computer-readable instructions may be provided.

According to an embodiment of the disclosure, the instructions, when executed by a processor including processing circuitry of an electronic device, may cause the electronic device to perform at least one operation.

According to an embodiment of the disclosure, the at least one operation may comprise identifying information associated with power consumption of first memory of the electronic device and second memory of the electronic device.

According to an embodiment of the disclosure, the at least one operation may comprise, based on information associated with the power consumption of the first memory and the second memory, identifying a memory area in which a plurality of objects displayed in a low power state are stored among the first memory and the second memory.

According to an embodiment of the disclosure, the at least one operation may comprise storing the plurality of objects in the identified memory area.

According to an embodiment of the disclosure, the at least one operation may comprise, based on information associated with the plurality of stored objects, displaying the plurality of objects through a display of the electronic device.

### [Description of the Drawings]

FIG. 1 is a block diagram illustrating an electronic device in a network environment according to an embodiment.
FIG. 2 is a block diagram for describing an example of a configuration of an electronic device, according to an embodiment of the disclosure.
FIG. 3 is a diagram for describing an example in which at least one processor of an electronic device provides image data stored in memory to a display, according to an embodiment of the disclosure.
FIG. 4 is a diagram for describing a method of managing a memory area in which image data of an electronic device is stored, according to an embodiment of the disclosure.
FIG. 5A is a diagram for describing an operation characteristic of memory of an electronic device, according to an embodiment of the disclosure.
FIG. 5B is a diagram for describing an operation characteristic of memory of an electronic device, according to an embodiment of the disclosure.
FIG. 5C is a diagram for describing an operation characteristic of memory of an electronic device, according to an embodiment of the disclosure.
FIG. 6 is a flowchart for describing a method of displaying a plurality of objects of an electronic device, according to an embodiment of the disclosure.
FIG. 7 is a diagram for describing an example in which at least one processor of an electronic device provides image data stored in memory to a display, according to an embodiment of the disclosure.
FIG. 8 is a flowchart for describing a method of providing image data of an electronic device to a display, according to an embodiment of the disclosure.
FIG. 9 is a diagram for describing an example in which at least one processor of an electronic device provides image data stored in memory to a display, according to an embodiment of the disclosure.
FIG. 10 is a diagram for describing a method of managing a memory area in which image data of an electronic device is stored, according to an embodiment of the disclosure.
FIG. 11A is a diagram for describing an example in which at least one processor of an electronic device provides image data stored in memory to a display, according to an embodiment of the disclosure.
FIG. 11B is a diagram for describing an example in which at least one processor of an electronic device provides image data stored in memory to a display, according to an embodiment of the disclosure.
FIG. 12 is a flowchart for describing a method of displaying a plurality of objects of an electronic device, according to an embodiment of the disclosure.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described as an example in an embodiment of the disclosure, but the electronic device may be referred to as a terminal, a mobile station, a mobile equipment (ME), a user equipment (UE), a user terminal (UT), a subscriber station (SS), a wireless device, a handheld device, or an access terminal (AT). Alternatively, in an embodiment of the disclosure, the electronic device may be a device having a communication function such as, for example, a mobile phone, a personal digital assistant (PDA), a smart phone, a wireless MODEM, or a notebook.

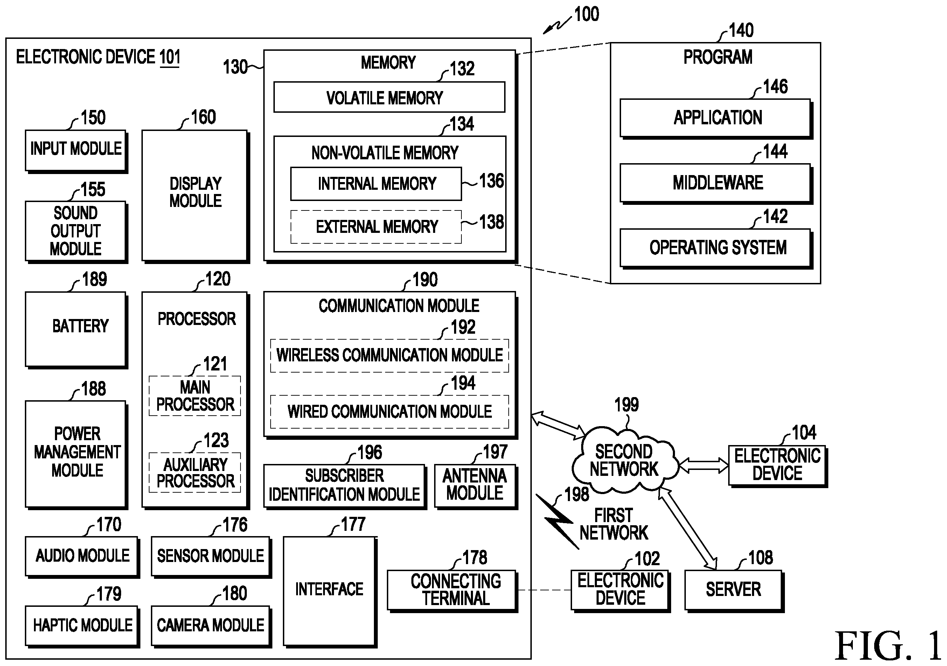

FIG. 1 is a block diagram illustrating an electronic device 101 in a network environment 100 according embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may acquire the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless fidelity (WiFi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

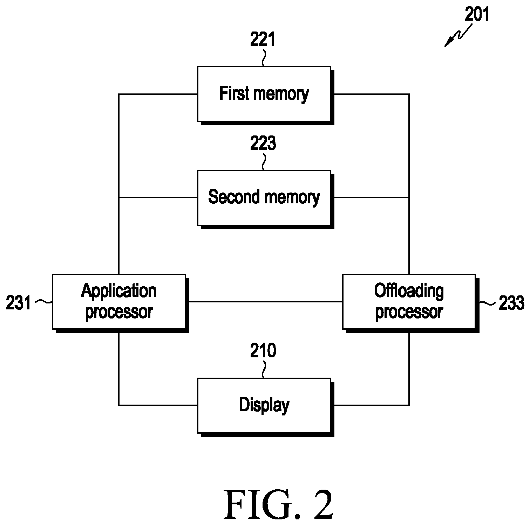

FIG. 2 is a block diagram for describing an example of a configuration of an electronic device 201 (e.g., an electronic device 101 in FIG. 1), according to an embodiment of the disclosure.

Referring to FIG. 2, in an embodiment, an electronic device 201 includes a display 210, first memory 221, second memory 223, an application processor 231, and an offloading processor 233.

In an embodiment, the display 210 may be included in a display module 160 in FIG. 1. The display 210 may visually provide image data.

In an embodiment, the first memory 221 may be included in memory 130 in FIG. 1. The first memory 221 may be system memory (e.g., dynamic random access memory (DRAM)) for an operation of the application processor 231 and/or the offloading processor 233. The first memory 221 may be large-capacity memory for storing data. For example, capacity of the first memory 221 may be in gigabytes (GB) units (e.g., 1 gigabyte to 64 gigabytes), and there is no limitation on a specific numerical value of memory capacity. A memory area of the first memory 221 may be divided into a code area, a data area, a stack area, and a heap area. The code area may be a memory area for storing instructions provided to the application processor 231 and/or the offloading processor 233. The data area may be a memory area for allocation for a variable. The stack area may be a memory area for static allocation. The heap area may be a memory area for dynamic allocation. The first memory 221 may be accessed by the application processor 231. The first memory 221 may be used for data transfer between the application processor 231 and the offloading processor 223. The first memory 221 may also be accessed by the offloading processor 223 in a power saving mode (or an "offloading scenario"). The first memory 221 may be used as auxiliary memory of the offloading processor 223.

In an embodiment, the second memory 223 may be included in the memory 130 in FIG. 1. The second memory 223 may be system memory (e.g., static random access memory (SRAM)) for an operation of the offloading processor 233 and/or the application processor 231. The second memory 223 may be low-capacity memory for storing data. For example, capacity of the second memory 223 may be in megabytes (MB) units (e.g., 1 megabyte to 16 megabytes), and there is no limitation on a specific numerical value of memory capacity. A memory area of the second memory 223 may be divided into a code area, a data area, a stack area, and a heap area. The second memory 223 may be accessed by the offloading processor 223 in a power saving mode (or, an "offloading scenario"). The second memory 223 may be used for data transfer between the offloading processor 223 and the application processor 231. The second memory 223 may also be accessed by the application processor 231.

In an embodiment, the application processor 231 may be included in a main processor 121 in FIG. 1. The application processor 231 may display image data corresponding to an application through the display 210. The image data corresponding to the application may be stored in at least one of the first memory 221 or the second memory 223. The application processor 231 may perform an overall operation for determining a memory area to store the image data corresponding to the application among the first memory 221 or the second memory 223. The application processor 231 may include one or more processors for determining the memory area to store the image data corresponding to the application among the first memory 221 or the second memory 223. The one or more processors may be operably connected to the first memory 221 and/or the second memory 223.

In an embodiment, the offloading processor 233 may be included in an auxiliary processor 123 in FIG. 1. The offloading processor 233 may, at least temporarily, provide image data to the display 210 instead of the application processor 231 so that the image data is displayed through the display 210 while the electronic device 201 operates in the power saving mode. The offloading processor 233 may, in the power saving mode, perform an overall operation for providing image data stored in the first memory 221 and/or the second memory 223 to the display 210.

In an embodiment, although the electronic device 201 is illustrated in FIG. 2 as including the display 210, the first memory 221, the second memory 223, the application processor 231, and/or the offloading processor 233, the disclosure is not limited thereto. The electronic device 201 may further include at least one component illustrated in FIG. 1. For example, the electronic device 201 may further include a power management module (e.g., a power management module 188 in FIG. 1) and a battery (e.g., a battery 189 in FIG. 1). The power management module and the application processor 231 may be implemented as an integrated system on chip (SoC). The power management module may also be implemented as an integrated circuit different from the application processor 231. The application processor 231 may determine the memory area to store the image data corresponding to the application among the first memory 221 or the second memory 223 based on identifying power consumption (or current consumption) of the first memory 221 and the second memory 223.

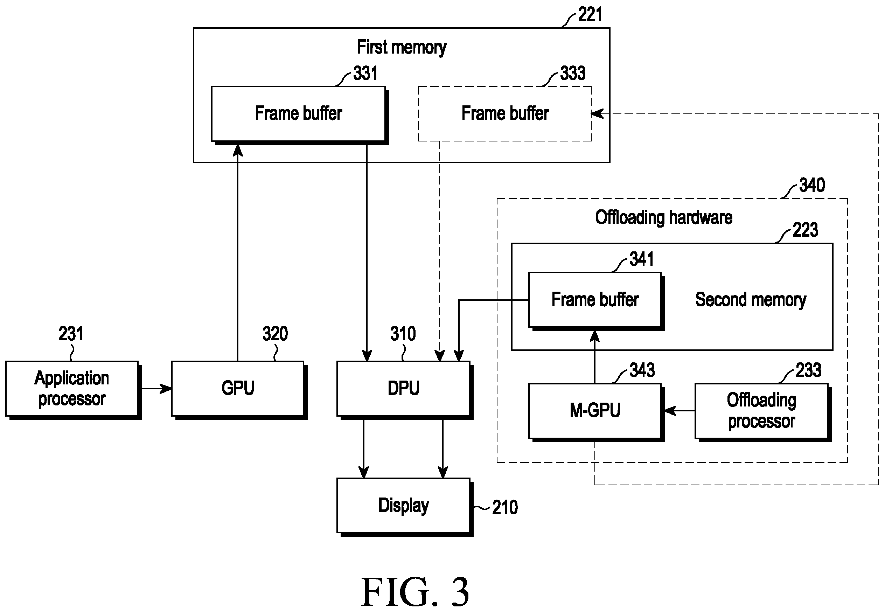

FIG. 3 is a diagram for describing an example in which at least one processor of an electronic device provides image data stored in memory to a display, according to an embodiment of the disclosure.

Referring to FIG. 3, in an embodiment, an electronic device 201 (e.g., an electronic device 101 in FIG. 1 and/or an electronic device 201 in FIG. 2) includes offloading hardware 340, an application processor 231, a graphic processing unit (GPU) 320, first memory 221, a display processing unit (DPU) (310), and/or a display 210. The offloading hardware 340 includes second memory 223, a mobile graphic processing unit (M-GPU) 343, and/or an offloading processor 233.

In an embodiment, the first memory 221 may be system memory for driving the application processor 231 or auxiliary memory of the offloading processor 233. The second memory 223 may be system memory for driving the offloading processor 233.

In an embodiment, the electronic device 201 may further include memory(s) other than the memories 221, 223 illustrated in FIG. 3. For example, the electronic device 201 may further include tight-coupled memory (TCM), pseudo SRAM (PSRAM), and/or non-volatile memory.

In an embodiment, the GPU 320 may be a configuration for supporting a graphic function of the application processor 231. The M-GPU 343 may be a configuration for supporting a graphic function of the offloading processor 233. Power consumed by the M-GPU 343 may be lower than power consumed by the GPU 320. The M-GPU 343 may draw a screen with a relatively low frame per second (FPS) to a frame buffer.

In an embodiment, the DPU 310 may synthesize the screen drawn by the GPU 320 or the M-GPU 343. Based on synthesizing the screen drawn in the frame buffer, the DPU 310 may provide the synthesized image to the display 210 (e.g., an organic light emitting diode (OLED), a TFT, or a liquid crystal display (LCD)) through a display interface.

In an embodiment, the display interface may be included in the offloading processor 233.

In an embodiment, the application processor 231 may provide image data to the display 210 based on accessing the first memory 221 (e.g., DRAM). For example, the application processor 231 may control the GPU 320 to draw an image to the frame buffer 331 of the first memory 221. The GPU 320 may update a pixel value based on accessing the frame buffer 331. The DPU 310 may display the image data of the frame buffer 331 through the display 210.

In an embodiment, the application processor 231 may determine a memory area in which image data is stored based on a characteristic of the memories 221, 223 and/or a characteristic of the image data. For example, the application processor 231 may store at least a part of the image data in the first memory 221 and store the remaining part of the image data in the second memory 223. The application processor 231 may optimize current to be consumed in an offloading scenario by dynamically allocating the memory area in which the image data is stored based on considering a current consumption characteristic of each of the memories 221, 223 according to a system requirement (e.g., FPS and/or memory usage) corresponding to the offloading scenario.

In an embodiment, the offloading processor 233 (e.g., an offloading micro control unit (MCU)) may perform an operation which requires power less than power consumed by the application processor 231.

Power consumption of the offloading processor 233 may be lower than power consumption of the application processor 231. The offloading processor 233 may operate in a power saving mode. The electronic device (e.g., a smartphone or a wearable electronic device) may reduce power consumption by displaying a screen with a relatively simple configuration based on an operation of the offloading processor 233. In the power saving mode, current consumption may be improved because the offloading processor 233 with relatively low power consumption is driven.

An operation of the offloading processor 233 to display a screen requiring relatively little power through the display 210 may be referred to as "display offloading." The offloading processor 340 may, for example, periodically display a screen including a relatively small number of objects instead of the application processor 231 in the offloading scenario. A screen displayed through the display 210 in power saving mode may include a plurality of objects. An address of objects (or image data) displayed on the display 210 may be provided to the offloading processor 233 while the application processor 231 is in an active state.

In an embodiment, a screen provided by the offloading processor 340 may include a screen indicating at least one of the current time, a notification, a calendar, or an image. The screen provided by the offloading processor 340 may also include a screen indicating user data. The user data may include data associated with a user action of the electronic device 201, such as the number of steps detected based on sensing information of a sensor (e.g., a sensor module (176)). The screen provided by the offloading processor 340 may be referred to as an "always on display (AOD) screen" or an "offloading display screen." The offloading processor 340 may also display the AOD screen based on occurrence of an event for displaying the screen.

In an embodiment, the offloading processor 233 may display the AOD screen based on accessing the first memory 221 and/or the second memory 223 in the power saving mode (or, the "offloading scenario"). If an operating mode of the electronic device 201 changes from one power saving mode to another power saving mode, a state (e.g., an active state or an inactive state) of at least one component illustrated in FIG. 3 may change.

In an embodiment, in a first power saving mode, the offloading processor 233 may access both the first memory 221 and the second memory 223. In the first power saving mode, the first memory 221, the offloading hardware 340, the DPU 310, and the display 210 may operate in the active state. In the first power saving mode, the GPU 320 and the application processor 231 may be in the inactive state.

In an embodiment, in a second power saving mode, the offloading processor 233 may only access the first memory 221. In the second power saving mode, the DPU 310, the display 210, the first memory 221, and at least a part (e.g., the offloading processor 233 and the M-GPU 343) of the offloading hardware 340 may operate in the active state. In the second power saving mode, the GPU 320, the application processor 231, and the second memory 223 may be in the inactive state.

In an embodiment, in a third power saving mode, the offloading processor 233 may only access the second memory 223. In the third power saving mode, the DPU 310, the display 210, the second memory 223, and the offloading hardware 340 may operate in the active state. In the third power saving mode, the GPU 320, the application processor 231, and the first memory 221 may be in the inactive state.

In an embodiment, the offloading processor 233 may display image data through the display 210 instead of the application processor 231 while the application processor 231 is in the inactive (e.g., sleep) state. The offloading processor 233 may provide the image data to the display 210 based on, for example, accessing the first memory 221 and/or the second memory 223 (e.g., SRAM).

In an embodiment, if image data displayed on an offloading display screen is stored in the second memory 223, the offloading processor 233 may control the M-GPU 343 to draw an image to the frame buffer 341 of the second memory 223. The M-GPU 343 may update a pixel value based on accessing the frame buffer 341. The DPU 310 may display the image data of the frame buffer 341 through the display 210.

In an embodiment, if the image data displayed on the offloading display screen is stored in the first memory 221, the offloading processor 233 may control the M-GPU 343 to draw the image to the frame buffer 333 of the first memory 221. The M-GPU 343 may update a pixel value based on accessing the frame buffer 333. The DPU 310 may display the image data of the frame buffer 333 through the display 210.

In an embodiment, if at least a part of the image data displayed on an offloading display screen is stored in the first memory 221 and the remaining part of the image data is stored in the second memory 223, the offloading processor 233 may control the M-GPU 343 to draw the image to the frame buffer 333 of the first memory 221 and the frame buffer 341 of the second memory 223. The M-GPU 343 may update a pixel value based on accessing the frame buffers 333, 341. The DPU 310 may display the image data of the frame buffers 333, 341 through the display 210.

In an embodiment, each of the application processor 231 and the offloading processor 233 may form at least a part of different chips. For example, the application processor 231 may form at least a part of a first chip. The offloading processor 233 may form at least a part of a second chip (e.g., the offloading hardware 340) separate from the first chip.

In an embodiment, the first memory 221 may be disposed outside the first chip and the second chip. The second memory 223 may be disposed inside the second chip. In an embodiment, the display 210 may further include a display driver integrated circuit (IC)(display driver IC: DDI). The second chip including the offloading processor 233 and the second memory 223 may be formed separately from the DDI.

In an embodiment, a hardware structure of the electronic device 201 is not limited to that illustrated in FIG. 3. For example, the second chip may also form at least a part of a display driver integrated circuit (DDI).

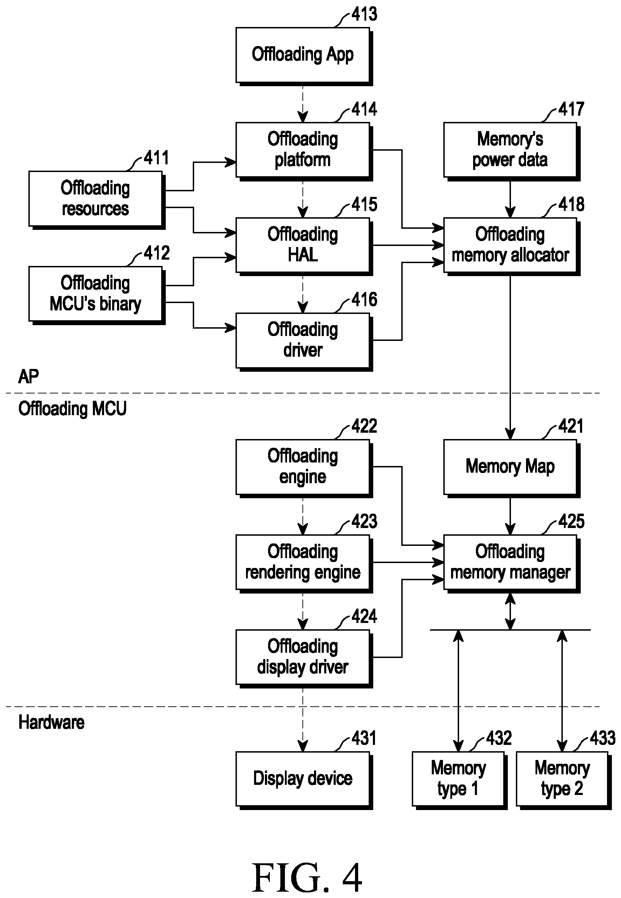

FIG. 4 is a diagram for describing a method of managing a memory area in which image data of an electronic device is stored, according to an embodiment of the disclosure.

In an embodiment, modules implemented (or stored) in an electronic device 201 may be implemented in a form of an application, a program, a computer code, instructions, a routine, a process, software, firmware, or a combination of at least two or more thereof which may be executed by an application processor (e.g., an application processor 231 in FIG. 2 or FIG. 3) and/or an offloading processor (e.g., an offloading processor 233 in FIG. 2 or FIG. 3). For example, if the modules are executed, the application processor and/or the offloading processor may perform an operation corresponding to each of the modules. Therefore, the expression below that "a specific module performs an operation" may be understood as "as a specific module is executed, an application processor and/or an offloading processor perform an operation corresponding to the specific module." In an embodiment, at least a part of the modules may include a plurality of programs, but are not limited thereto. Meanwhile, at least the part of the modules may also be implemented in a form of hardware (e.g., a processing circuit (not shown)). In an embodiment, the modules, if implemented on an Android operating system, may be implemented as a service or an application.

In an embodiment, the application processor may include a plurality of modules. The plurality of modules include offloading resources 411, an offloading MCU's binary 412, an offloading app 413, an offloading platform 414, an offloading hardware abstraction layer (HAL) 415, an offloading driver 416, memory's power data 417, and/or an offloading memory allocator 418. The offloading resources 411 may manage resources displayed on a screen when display offloading is performed.

In an embodiment, resources used in an offloading scenario may include objects such as an image and/or a font. The offloading MCU's binary 412 may manage codes executed by the offloading processor. The application processor may load binary into a set memory and reset the offloading processor before an operation of the offloading processor. The offloading processor may perform display offloading by executing the binary.

In an embodiment, the offloading application 413 may be a user application program based on an application program interface (API) provided by a platform. The offloading application 413 may output the current time and/or a set screen.

In an embodiment, the offloading platform 414 may provide an API for utilizing an offloading function. The offloading platform 414 may manage information, a resource, and/or an internal state associated with the offloading function.

In an embodiment, the offloading application 413 may operate without implementing complex functions based on the API provided by the offloading platform 414. The offloading HAL 415 may provide abstracted information to the offloading platform 414 based on abstracting an operation of hardware associated with the offloading function. The offloading HAL 415 may reduce the risk of platform fragmentation due to hardware configuration based on abstracting the hardware. The offloading driver 416 may control hardware used for a display offloading operation. For example, the offloading driver 416 may manage hardware (e.g., the offloading hardware 340) including the offloading processor. The offloading driver 416 may also manage at least one hardware for a communication (e.g., exchange of an event and/or data) between the application processor and the offloading processor.

In an embodiment, the offloading power data 417 may manage current consumption data associated with driving of memories (e.g., a first memory 221 and a second memory 223). The current consumption data may be data based on variables which affect current consumption of a memory. The variables which affect the current consumption of the memory may include, for example, memory usage amount and/or a memory access cycle. The current consumption data may be data stored in the electronic device 201. The current consumption data may also be data calculated (or predicted) by the electronic device 201.

In an embodiment, the offloading memory allocator 418 may redispose a memory block for display offloading. For example, the offloading memory allocator 418 may classify memory blocks based on a type of the memory blocks. The offloading memory allocator 418 may determine a location of the memory block using current consumption data calculated based on a requirement of the memory (e.g., an FPS and/or a memory size). Location information (e.g., an entry address and/or a memory size) of the memory block redisposed by the offloading memory allocator 418 may be provided to the offloading processor through the memory map 421. The offloading processor may access image data to be displayed on the display based on referring to the memory block redisposed by the offloading memory allocator 418.

In an embodiment, the offloading processor may include a plurality of modules. The plurality of modules include an offloading engine 422, an offloading rendering engine 423, an offloading display driver 424, an offloading memory manager 425, and/or a memory map 421.

In an embodiment, the offloading engine 422 may perform various operations for display offloading. The offloading engine 422 may be implemented as a software engine (e.g., an operating system) for display offloading, but is not limited thereto.

In an embodiment, the offloading rendering engine 423 may perform an operation associated with a graphic for rendering.

In an embodiment, the offloading display driver 424 may control at least one piece of hardware used for a display offloading operation. The offloading display driver 424 may process data transferred through at least one piece of hardware for a communication between the application processor and the offloading processor.

In an embodiment, the offloading memory manager 425 may identify a memory block which is redisposed by the application processor (e.g., the offloading memory allocator 418). For example, the offloading memory manager 425 may convert information of the memory block into an address accessible by the offloading processor based on reading address information of the memory block from the memory map 421.

In an embodiment, the memory map 421 may store location information of objects displayed during the display offloading operation. The offloading processor may access the first memory and/or the second memory based on reading location information stored in the memory map 421.

In an embodiment, the display device 431 (e.g., a display module 160 and/or a display 210) may output an image which is visually recognizable by a user of the electronic device 201 based on a frame buffer (or a pixel value included in the frame buffer) provided by the application processor or the offloading processor. A first type of memory 432 may have a different power consumption characteristic than a second type of memory 433.

In an embodiment, the application processor may determine a memory area of image data to be displayed in a power saving mode based on a power consumption characteristic of the first type of memory 432 and a power consumption characteristic of the second type of memory 433. The application processor may store image data corresponding to a set screen in the memory area based on occurrence of an event for setting the screen to be displayed in the power saving mode. The application processor may change the memory area of the image data to be displayed in the power saving mode (or redispose the location of the memory block) based on identifying a user input for changing the screen to be displayed in the power saving mode. The application processor may provide address information corresponding to the memory area to the offloading processor so that the offloading processor accesses the image data stored in a first memory (e.g., the first memory 221) and/or a second memory (e.g., the second memory 223). The offloading processor may display the image data through the display device 431 instead of the application processor, based on accessing the first type of memory 432 and/or the second type of memory 433 in the power saving mode.

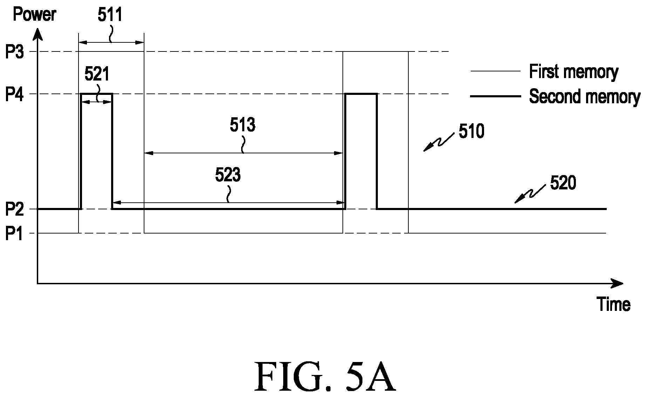

FIG. 5A is a diagram for describing an operation characteristic of memory of an electronic device, according to an embodiment of the disclosure.

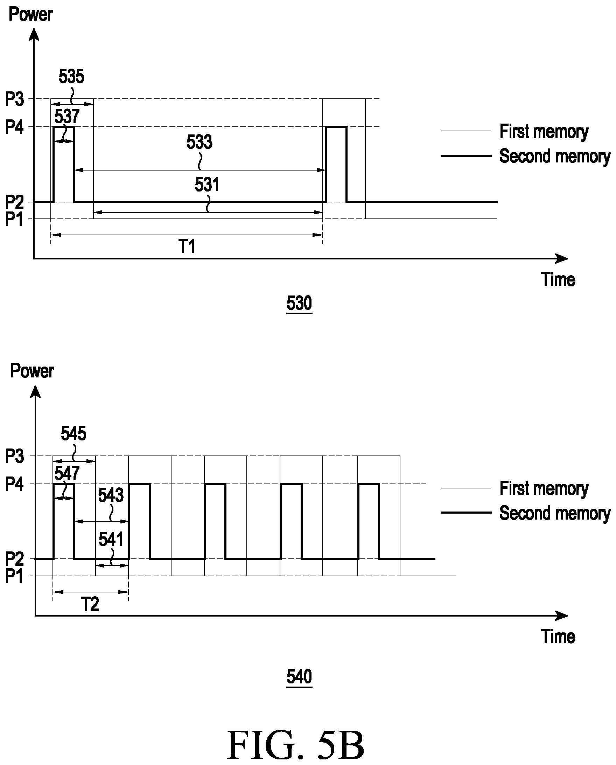

FIG. 5B is a diagram for describing an operation characteristic of memory of an electronic device, according to an embodiment of the disclosure.

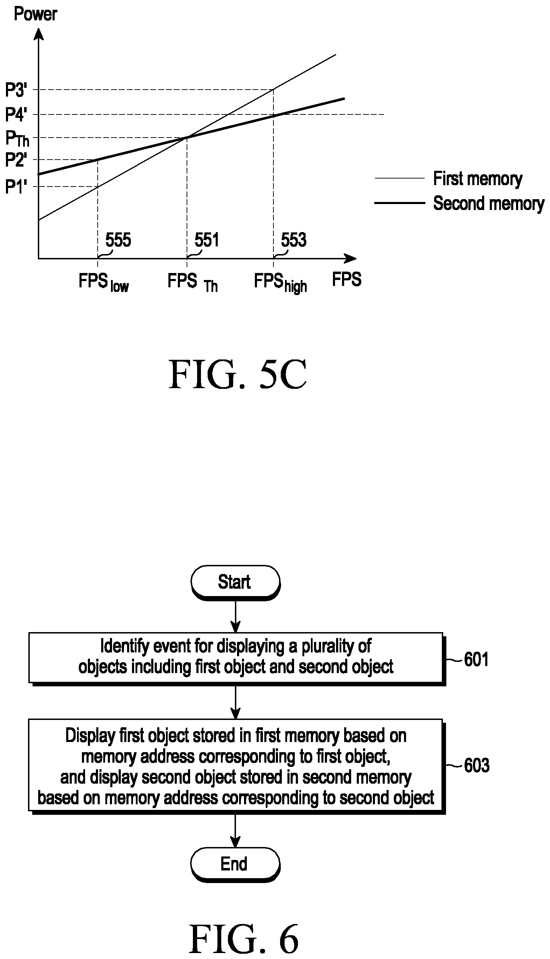

FIG. 5C is a diagram for describing an operation characteristic of memory of an electronic device, according to an embodiment of the disclosure.

In an embodiment, an electronic device 201 may optimize current consumed by a display offloading operation by determining a memory area for image data based on a current consumption characteristic of pieces of memories (e.g., first memory 221 and second memory 223) included in the electronic device 201. For example, a first characteristic of a first memory may be different from a second characteristic of a second memory. The first characteristic may include a first power consumption characteristic. The second characteristic may include a second power consumption characteristic. The application processor may perform an operation of determining a memory area based at least in part on the first power consumption characteristic or the second power consumption characteristic.

Referring to FIG. 5A, in an embodiment, a power consumption characteristic 510 (or a current consumption characteristic) of a system in a case that the first memory is used during a display offloading operation and a power consumption characteristic 520 of the system in a case that the second memory is used are illustrated.

In an embodiment, memory capacity of the first memory may be greater than memory capacity of the second memory. An access speed of the first memory may be slower than an access speed of the second memory. For example, the access speed of the first memory may correspond to a first access speed. The access speed of the second memory may correspond to a second access speed. The second access speed may be faster than the first access speed. An operation speed of the first memory may be slower than an operation speed of the second memory because additional operation time by a dynamic voltage scaling (DVS) operation of the application processor is required. Peak current of the first memory may be greater than peak current of the second memory. Power consumption of the second memory may increase due to leakage current if memory usage amount is relatively large.

Referring back to FIG. 5A, in an embodiment, in an execution (or run) period 511 of the first memory, power (P3) (or current) consumed by the electronic device 201 when using the first memory may be greater than power (P4) (or current) consumed by the electronic device 201 when using the second memory in an execution period 521 of the second memory. In terms of power consumption, operating power consumption of the first memory may correspond to first operating power consumption. Operating power consumption of the second memory may correspond to second operating power consumption. The second operating power consumption may be less than the first operating power consumption.

In an embodiment, in an idle period 523 of the second memory, power (P2) (or current) consumed by the electronic device 201 when using the second memory may be greater than power (P1) consumed by the electronic device 201 when using the first memory in an idle period 513 of the first memory. Idle power consumption of the first memory may correspond to first idle power consumption. Idle power consumption of the second memory may correspond to second idle power consumption. The second idle power consumption may be greater than the first idle power consumption.

Referring to reference numeral 530 in FIG. 5B, in an embodiment, power consumption graphs are shown if an execution cycle (T1) is relatively long (or if FPS is low). If the execution cycle (T1) is relatively long, if the first memory with relatively low idle power consumption is used, there is a possibility that the overall power consumption of the system will be reduced. For example, power (P2) (or current) consumed by the second memory in an idle period 533 of the second memory may be greater than power (P1) (or current) consumed by the first memory in an idle period 531 of the first memory. If the idle periods 531, 533 are relatively longer than the execution periods 535, 537 within the execution cycle T1, use of the first memory may be advantageous in terms of power consumption.

Referring to reference numeral 540 in FIG. 5B, in an embodiment, power consumption graphs are shown if an execution cycle (T2) is relatively short (or if FPS is high). If the execution cycle (T2) is relatively short, if the second memory with relatively low operating power consumption is used, there is a possibility that the overall power consumption of the system will be reduced. For example, if the execution cycle T2 is relatively short compared to the execution cycle T1, the execution periods 545, 547 may be frequently repeated. If the execution periods 545, 547 are frequently repeated, even though power (P1) (or current) consumed by the first memory in an idle period 541 of the first memory is lower than power (P2) (or current) consumed by the second memory in an idle period 543 of the second memory, average power consumption by an operation of the second memory may be lower than average power consumption by an operation of the first memory. Since power (P4) (or current) consumed by the second memory in the execution period 547 of the second memory is lower than power (P3) (or current) consumed by the first memory in the execution period 545 of the first memory, if an execution cycle is relatively short, use of the second memory may be advantageous in terms of power consumption.

In an embodiment, an application processor (e.g., an application processor 231) may determine memory (or a memory area) used during a display offloading operation based on a characteristic of memory (e.g., an operating power consumption characteristic and/or an idle power consumption characteristic). The application processor may optimize power consumption of the entire system due to the display offloading operation by dynamically configuring memory for display offloading based on a requirement of the system (e.g., FPS, memory usage frequency, and/or memory usage amount).

Referring to FIG. 5C, in an embodiment, a power consumption characteristic (or a current consumption characteristic) of memory according to driving FPS during a display offloading operation are illustrated. For example, at relatively low driving FPS (FPS_low) 555, power (P1') consumed by an electronic device 201 when using first memory may be less than power (P2') consumed by the electronic device 201 when using second memory.

In an embodiment, the application processor may reduce the overall power consumption of the system by allocating image data to the first memory based on identifying that the relatively low driving FPS 555 is required in the power saving mode. At a relatively high driving FPS (FPS_high) 553, power (P4') consumed by the electronic device 201 when using the second memory may be less than power (P3') consumed by the electronic device 201 when using the first memory.

In an embodiment, the application processor may reduce the overall power consumption of the system by allocating the image data to the second memory based on identifying that the relatively high driving FPS 553 is required in the power saving mode. The application processor may identify threshold FPS (FPS_Th) 551 based on information associated with a current consumption characteristic of pieces of memory. At the threshold FPS 551, amount of power consumed by the electronic device 201 when using the first memory may correspond to amount of power consumed by the electronic device 201 when using the second memory.

In an embodiment, the electronic device 201 may partition memory required during an offloading operation corresponding to a memory characteristic. The electronic device 201 mya perform a memory configuration (e.g., partitioning) for implementing optimal power consumption based on, for example, a requirement (e.g., FPS, memory usage frequency, and/or memory usage amount). The electronic device 201 may minimize power consumption of the entire system based on a dynamic memory configuration optimized for power consumption.

In an embodiment, the electronic device 201 may reduce the overall power consumption of the system in comparison to a case where a memory area of image data displayed in the power saving mode is allocated regardless of a update cycle (or a refresh cycle) of a display screen (e.g., a watch face). The application processor may obtain (e.g., calculate) threshold FPS 551 (or FPS_Th) illustrated in FIG. 5C based on power consumption data due to the use of memory (e.g., DRAM and SRAM) of the system.

In an embodiment, the application processor may perform memory partitioning to primarily use the first memory (e.g., the DRAM) at FPS lower than the threshold FPS 551, and to primarily use the second memory (e.g., the SRAM) at FPS higher than the threshold FPS 551. For example, the application processor may reduce the overall power consumption of the system by allocating most of the image data to the first memory based on identifying that the driving FPS 555 (or FPS_low) (e.g., an update cycle of 60 seconds) required in the power saving mode is lower than the threshold FPS. The application processor may reduce the overall power consumption of the system by allocating most of the image data to the second memory based on identifying that the driving FPS 553 (e.g., an update cycle of 1 second) (or FPS_high) required in the power saving mode is higher than the threshold FPS.

FIG. 6 is a flowchart for describing a method of displaying a plurality of objects of an electronic device, according to an embodiment of the disclosure.

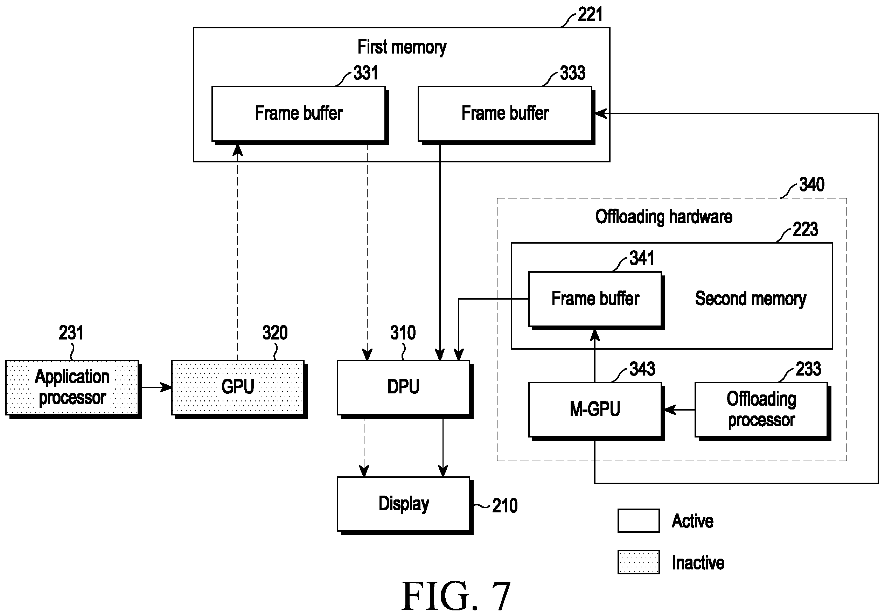

Embodiment in FIG. 6 will be described with reference to FIG. 7.

FIG. 7 is a diagram for describing an example in which at least one processor of an electronic device provides image data stored in memory to a display, according to an embodiment of the disclosure.

In an embodiment, operations illustrated in FIG. 6 may be performed in various orders, not limited to an illustrated order. For example, an order of each operation may be changed, and at least two operations may be performed in parallel. According to an embodiment, more operations may be performed than operations illustrated in FIG. 6, or at least one operation may be performed less than operations illustrated in FIG. 6.

Referring to FIG. 6, in operation 601, in an embodiment, an electronic device 201 (e.g., an offloading processor 233) may identify an event for displaying a plurality of objects including a first object and a second object. The electronic device 201, in a power saving mode, may identify a user input for displaying the plurality of objects, or may identify that a cycle for displaying the plurality of objects has arrived. The event for displaying the plurality of objects is not limited to an example described above. In an embodiment, a update cycle for the first object may be different from a update cycle for the second object. For example, the update cycle for the first object may be longer than the update cycle for the second object.

In operation 603, in an embodiment, the electronic device 201 may display the first object stored in first memory (e.g., first memory 221) through a display (e.g., a display 210) based on a memory address corresponding to the first object, and may display the second object stored in second memory (e.g., second memory 223) through the display based on a memory address corresponding to the second object. In an embodiment, the electronic device 201 may identify a memory address corresponding to each of the plurality of objects included in a screen displayed in a power saving mode.

Referring to FIG. 7, in an embodiment, in a power saving mode, an application processor 231 and a GPU 320 may maintain an inactive state.

In an embodiment, in the power saving mode, an offloading processor 233 may operate in an active state. The offloading processor 233 may identify a memory area determined by the application processor 231. Based on identifying the memory area, the offloading processor 233 may obtain image data corresponding to an application. The offloading processor 233 may display the obtained image data through a display 210. For example, the offloading processor 233 may display, through the display 210, a plurality of objects which include a first object stored in first memory 221 and a second object stored in second memory 223. For example, due to a current consumption characteristic of the first memory 221, the first object with a relatively long update cycle may be stored in the first memory 221. Due to a current consumption characteristic of the second memory 223, the second object with a relatively short update cycle may be stored in the second memory 223.

In an embodiment, the offloading processor 233 may display, through the display 210, the first object stored in the first memory 221 based on a memory address of the first object, and may display the second object stored in the second memory 223 based on a memory address of the second object. The offloading processor 233 may optimize power consumed by an electronic device 201 by performing a display offloading operation based on a memory address corresponding to objects.

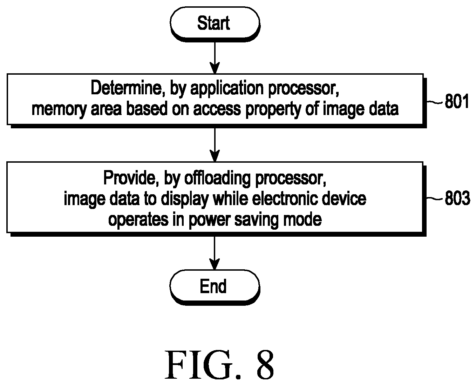

FIG. 8 is a flowchart for describing a method of providing image data of an electronic device to a display, according to an embodiment of the disclosure.

Embodiment in FIG. 8 will be described with reference to FIGS. 7, 10, 11A, and 11B.

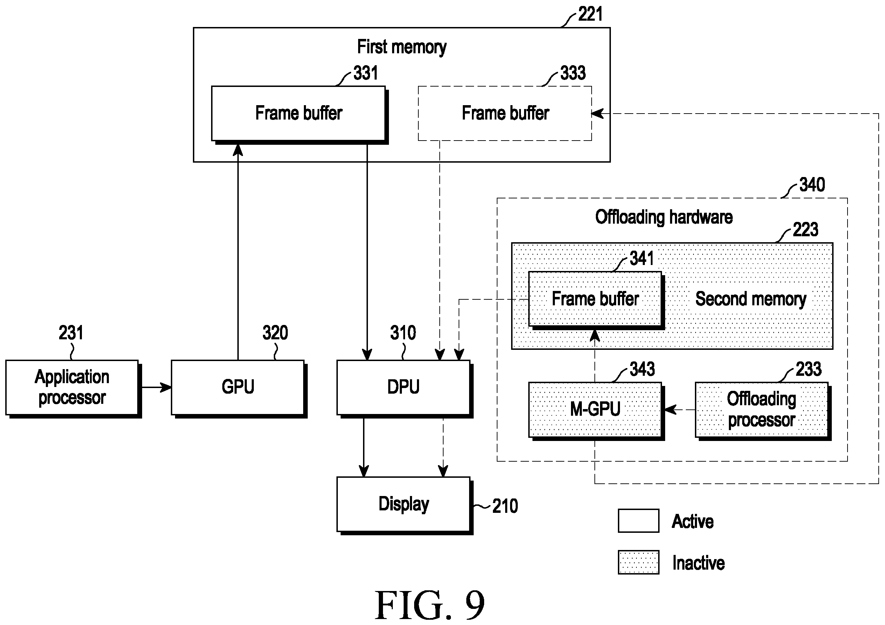

FIG. 9 is a diagram for describing an example in which at least one processor of an electronic device provides image data stored in memory to a display, according to an embodiment of the disclosure.

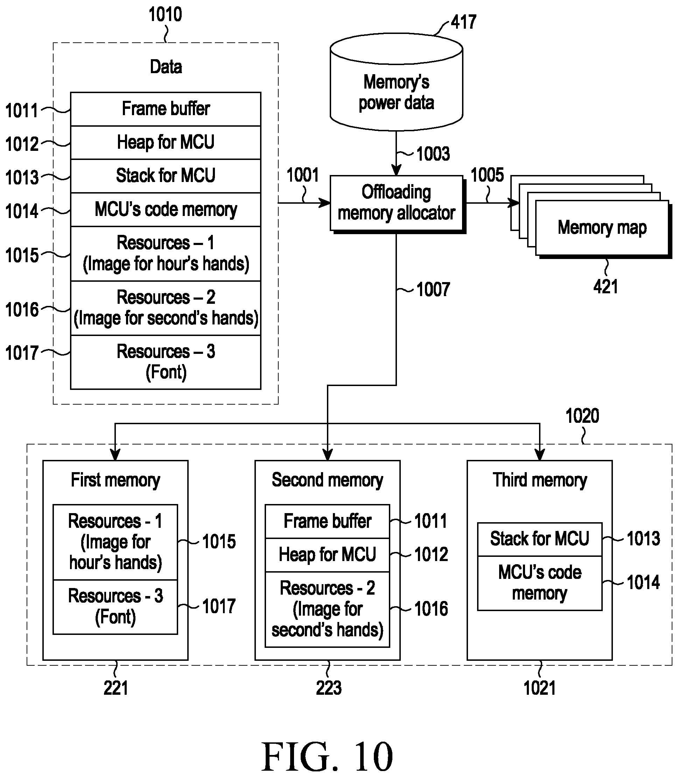

FIG. 10 is a diagram for describing a method of managing memory area in which image data of an electronic device is stored, according to an embodiment of the disclosure.

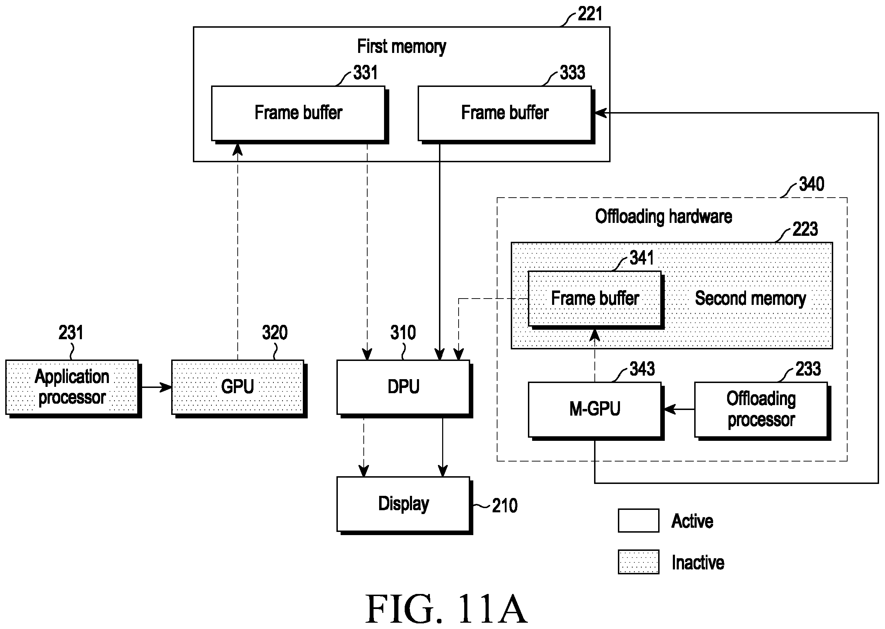

FIG. 11A is a diagram for describing an example in which at least one processor of an electronic device provides image data stored in memory to a display, according to an embodiment of the disclosure.

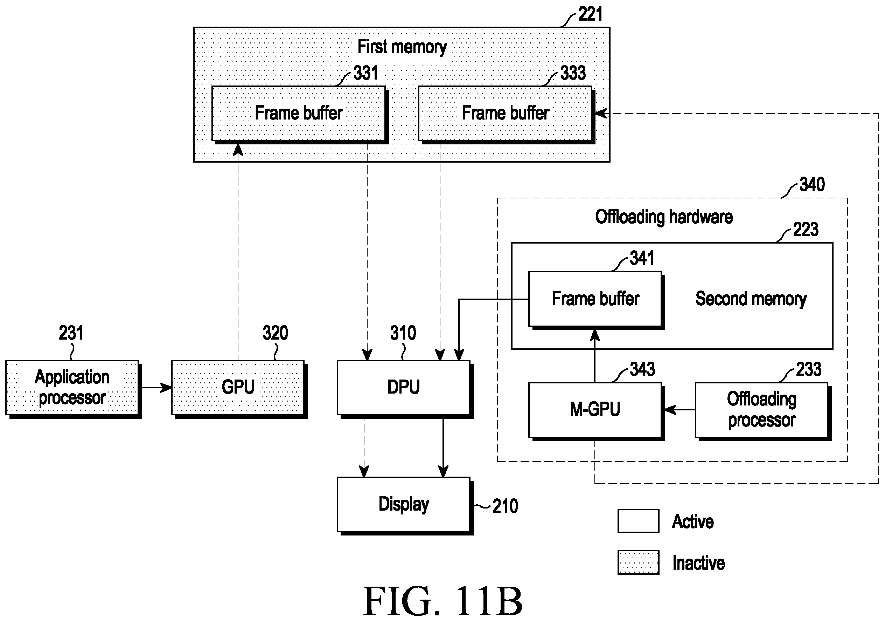

FIG. 11B is a diagram for describing an example in which at least one processor of an electronic device provides image data stored in memory to a display, according to an embodiment of the disclosure.

In an embodiment, operations illustrated in FIG. 8 may be performed in various orders, not limited to an illustrated order. For example, an order of each operation may be changed, and at least two operations may be performed in parallel. According to an embodiment, more operations may be performed than operations illustrated in FIG. 8, or at least one operation may be performed less than operations illustrated in FIG. 8.

Referring to FIG. 8, in operation 801, in an embodiment, an electronic device 201 (e.g., an application processor 231) may determine a memory area based at least in part on an access property of image data. The application processor 231 may identify at least one of a size of the image data, a task property for the image data, or an access frequency for the image data as the access property.

Referring to FIG. 9, while an application processor 231 performs an operation of determining a memory area for image data, an offloading processor 233 may maintain an inactive state. An electronic device 201 may determine first memory 221 as the memory area to store the image data, based at least in part on a fact that an access property corresponds to a first access frequency. The electronic device 201 may store the image data in the first memory 221, for example, if driving FPS (e.g., FPS_low 555 in FIG. 5C) for a power saving mode is lower than threshold FPS (e.g., FPS_Th 551 in FIG. 5C). The electronic device 201 may also store the image data in the first memory 221 if a size of the image data is relatively large. The electronic device 201 may determine second memory 223 as the memory area to store the image data, based at least in part on a fact that the access property corresponds to a second access frequency. The electronic device 201 may store the image data in the second memory 223, for example, if the driving FPS (e.g., FPS_high 553 in FIG. 5C) for the power saving mode is higher than the threshold FPS (e.g., FPS_Th 551 in FIG. 5C). The electronic device 201 may also store the image data in the second memory 223 if the size of the image data is relatively small.

In an embodiment, the application processor 231 may perform the operation of determining the memory area further based on first power consumption and second power consumption estimated to be consumed by the first memory 221 and the second memory 223, respectively, in order to access the memory area to store the image data. The application processor 231 may store the image data in the first memory 221 if the first power consumption estimated to be consumed by the first memory 221 in the power saving mode is less than the second power consumption estimated to be consumed by the second memory 223 in the power saving mode. The application processor 231 may store the image data in the second memory 223 if the second power consumption estimated to be consumed by the second memory 223 in the power saving mode is less than the first power consumption estimated to be consumed by the first memory 221 in the power saving mode.

Referring to FIG. 10, in an embodiment, an application processor may store image data 1010 in at least one of a plurality of pieces of memory 1020 included in an electronic device 201. The image data 1010 may include data 1011 associated with a frame buffer of offloading hardware (e.g., offloading hardware 340), data 1012 associated with a heap area of the offloading hardware, data 1013 associated with a stack area of the offloading hardware, data 1014 associated with a code area of the offloading hardware, image data 1015 associated with hour's hands, image data 1016 associated with second's hands, and image data 1017 associated with a font, and specific data included in the image data 1010 is not limited to an example described above. In FIG. 10, first memory 221, second memory 223, and third memory 1021 are illustrated as examples of the plurality of pieces of memory 1020 included in the electronic device 201, but there is no limitation thereto. For example, the application processor may determine a memory area in which the image data 1010 is to be stored among at least one of the first memory 221 or the second memory 223. The application processor may also determine the memory area in which the image data 1010 is to be stored among four or more pieces of memory.

In an embodiment, the application processor may secure a memory area required for a display offloading operation before the display offloading operation is performed. The application processor may classify the image data 1010 required for the display offloading operation. The application processor may redispose the image data (or resources) to the secured memory area so that the offloading processor may access the image data in a power saving mode. For example, an offloading memory allocator (e.g., an offloading memory allocator 418) may obtain (1001) information associated with a memory property and/or the image data. The information associated with the memory property may include information indicating the memory property such as, for example, read only, write only, or read/write. The information associated with the image data may include information associated with a maximum memory size, a minimum memory size, and an access frequency required for a display offloading operation.

In an embodiment, the offloading memory allocator may obtain (1003) information associated with a current consumption characteristic of memory from memory power data 417. The offloading memory allocator may determine a memory area in which the image data is physically disposed based on obtaining information associated with a memory property, information associated with the image data, and/or the information associated with the current consumption characteristic of the memory. For example, the offloading memory allocator may determine the first memory 221 as a memory area in which the image data 1015 associated with the hour's hands is to be stored based on driving FPS for the image data 1015 associated with the hour's hands being relatively low.

In an embodiment, the offloading memory allocator may determine the first memory 221 as a memory area in which the image data 1017 associated with the font is to be stored, based on driving FPS for the image data 1017 associated with the font being relatively low. The offloading memory allocator may determine the second memory 223 as a memory area in which the image data 1016 associated with the second's hands is to be stored, based on driving FPS for the image data 1016 associated with the second's hands being relatively high. The offloading memory allocator may determine the second memory 223 as a memory area in which the data 1011 associated with the frame buffer is to be stored, and there is no specific limitation on memory in which the data 1011 associated with the frame buffer is stored.

In an embodiment, the offloading memory allocator may determine the third memory 1021 as a memory area in which the data 1013 associated with the stack area and the data 1014 associated with the code area are to be stored, and there is no specific limitation on memory in which the data 1013 associated with the stack area and the data 1014 associated with the code area are stored. The offloading memory allocator may record (1005) information associated with a memory location and information associated with a memory block in the memory map 421. The offloading memory allocator may store (1007) data of the memory block in the determined memory area. The offloading memory allocator may redispose a partitioned memory block by performing an operation of obtaining (1001, 1003) information for all memory blocks, an operation of recording (1005) the information in the memory map, and an operation of storing (1007) the information in the memory.

In operation 803, in an embodiment, the electronic device 201 (e.g., the offloading processor 233) may provide the image data to the display 210 instead of the application processor 231 so that the image data is displayed through the display 210, at least temporarily, while the electronic device 201 is operating in the power saving mode. Power saving modes may be distinguished based on memory(s) which is activated among the first memory 221 or the second memory 223.

In an embodiment, if the power saving mode corresponds to a first power saving mode, the electronic device 201 may display the plurality of objects corresponding to the image data through the display 210 based on activating the first memory 221 and the second memory 223. For example, as illustrated in FIG. 7, the offloading processor 233 may provide the first object stored in the first memory 221 and the second object stored in the second memory 223 to the display 210 in the first power saving mode.

Referring to FIG. 11A, in an embodiment, if a power saving mode corresponds to a second power saving mode, an electronic device 201 may display a plurality of objects corresponding to image data through a display 210 based on activating first memory 221 and deactivating second memory 223. For example, if image data for a screen displayed in the power saving mode is stored in the first memory 221, an offloading processor 223 may provide the plurality of objects stored in the first memory 221 to the display 210 in the second power saving mode.

Referring to FIG. 11B, in an embodiment, if a power saving mode corresponds to a third power saving mode, an electronic device 201 may display a plurality of objects corresponding to image data through a display 210 based on deactivating first memory 221 and activating second memory 223. For example, if image data for a screen displayed in the power saving mode is stored in the second memory 223, the offloading processor 223 may provide the plurality of objects stored in the second memory 223 to the display 210 in the second power saving mode.

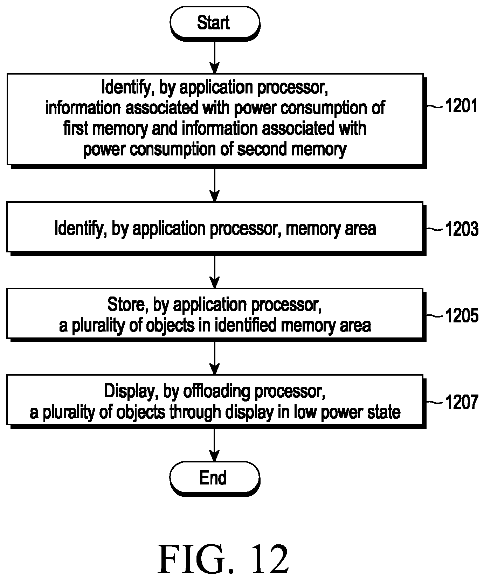

FIG. 12 is a flowchart for describing a method of displaying a plurality of objects of an electronic device, according to an embodiment of the disclosure.

In an embodiment, operations illustrated in FIG. 12 may be performed in various orders, not limited to an illustrated order. For example, an order of each operation may be changed, and at least two operations may be performed in parallel. According to an embodiment, more operations may be performed than operations illustrated in FIG. 12, or at least one operation may be performed less than operations illustrated in FIG. 12.

Referring to FIG. 12, in operation 1201, in an embodiment, an electronic device 201 (e.g., an application processor 231) may identify information associated with power consumption of first memory and second memory. For example, the electronic device 201 may identify information associated with power consumption of memory according to driving FPS. The second memory may be memory with smaller storage capacity than the first memory.

In operation 1203, in an embodiment, the electronic device 201 may identify a memory area in which a plurality of objects displayed in a low power state are stored among the first memory and the second memory based on information associated with power consumption of the first memory and the second memory. The electronic device 201 may determine a memory area corresponding to each of the plurality of objects based on identifying power predicted to be consumed in the low power state (or a power saving mode). In operation 1205, in an embodiment, the electronic device 201 may store the plurality of objects in the identified memory area.

In operation 1207, in an embodiment, the electronic device 201 (e.g., an offloading processor 233) may display the plurality of objects through the display 210 in the low power state based on information associated with the plurality of stored objects. The electronic device 201 may determine a memory area in which image data (or data blocks) is stored based on a current consumption characteristic of the memory, and may optimize power consumption by displaying the image data in the low power state.

According to an embodiment of the disclosure, an electronic device (e.g., an electronic device 201) may comprise a display (e.g., a display 201), first memory (e.g., first memory 221) with a first characteristic, second memory (e.g., second memory 223) with a second characteristic different from the first characteristic, an application processor (e.g., an application processor 231) configured to determine a memory area to store image data corresponding to an application among the first memory 221 or the second memory 223, and an offloading processor (e.g., an offloading processor 233).

According to an embodiment of the disclosure, the offloading processor 233 may be configured to identify an event for displaying a plurality of objects including a first object and a second object.

According to an embodiment of the disclosure, the offloading processor 233 may be configured to, based on a memory address corresponding to the first object, display, through the display 210, the first object stored in the first memory 221.

According to an embodiment of the disclosure, the offloading processor 233 may be configured to, based on a memory address corresponding to the second object, display, through the display 210, the second object stored in the second memory 223.

According to an embodiment of the disclosure, the application processor 231 may be configured to, based at least in part on an access property of the image data, determine the memory area.

According to an embodiment of the disclosure, the offloading processor 233 may be configured to provide the image data to the display 210 instead of the application processor 231 such that the image data is displayed, at least temporarily, through the display 210 while the electronic device 201 operates in a power saving mode.

According to an embodiment of the disclosure, the application processor 231 may be configured to identify at least one of a size of the image data, a task property for the image data, or an access frequency for the image data as the access property.

According to an embodiment of the disclosure, the application processor 231 may be configured to, based at least in part on that the access property corresponds to a first access frequency, determine the first memory 221 as the memory area to store the image data.

According to an embodiment of the disclosure, the application processor 231 may be configured to, based at least in part on that the access property corresponds to a second access frequency, determine the second memory 223 as the memory area to store the image data.

According to an embodiment of the disclosure, the offloading processor 233 may be configured to, in case that the power saving mode corresponds to a first power saving mode, based on activating the first memory 221 and the second memory 223, display, through the display 210, a plurality of objects corresponding to the image data.

According to an embodiment of the disclosure, the offloading processor 233 may be configured to, in case that the power saving mode corresponds to a second power saving mode, based on activating the first memory 221 and deactivating the second memory 223, display, through the display 210, the plurality of objects corresponding to the image data.

According to an embodiment of the disclosure, the offloading processor 233 may be configured to, in case that the power saving mode corresponds to a third power saving mode, based on deactivating the first memory 221 and activating the second memory 223, display, through the display 210, the plurality of objects corresponding to the image data.

According to an embodiment of the disclosure, the application processor 231 may be configured to, based on occurrence of an event for setting a screen displayed in a power saving mode, store image data corresponding to a set screen in the memory area.

According to an embodiment of the disclosure, the application processor 231 may be configured to, provide the offloading processor 233 with address information corresponding to the memory area such that the offloading processor 233 accesses the image data stored in the first memory 221 or the second memory 223.

According to an embodiment of the disclosure, the first characteristic of the first memory 221 and the second characteristic of the second memory 223, respectively, may include a first power consumption characteristic and a second power consumption characteristic different from the first power consumption characteristic.

According to an embodiment of the disclosure, the application processor 231 may be configured to, based at least in part on the first power consumption characteristic or the second power consumption characteristic, perform an operation of determining the memory area.

According to an embodiment of the disclosure, the application processor 231 may be configured to, further based on first power consumption and second power consumption estimated to be consumed by the first memory 221 and the second memory 223, respectively, for accessing the memory area storing the image data, perform an operation of determining the memory area.

According to an embodiment of the disclosure, operating power consumption of the first memory 221 may correspond to first operating power consumption.

According to an embodiment of the disclosure, operating power consumption of the second memory 223 may correspond to second operating power consumption less than the first operating power consumption.

According to an embodiment of the disclosure, idle power consumption of the first memory 221 may correspond to first idle power consumption.

According to an embodiment of the disclosure, idle power consumption of the second memory 223 may correspond to second idle power consumption greater than the first idle power consumption.

According to an embodiment of the disclosure, an access speed of the first memory 221 may correspond to a first access speed.

According to an embodiment of the disclosure, an access speed of the second memory 223 may correspond to a second access speed higher than the first access speed.

According to an embodiment of the disclosure, the application processor 231 may form at least a part of a first chip.

According to an embodiment of the disclosure, the offloading processor 233 may form at least a part of a second chip separate from the first chip.

According to an embodiment of the disclosure, the first memory 221 may be disposed outside the first chip and the second chip.

According to an embodiment of the disclosure, the second memory 223 may be disposed inside the second chip.

According to an embodiment of the disclosure, the display 210 may further include display driver integrated circuitry (DDI).

According to an embodiment of the disclosure, the second chip may be formed separately from the DDI.

According to an embodiment of the disclosure, the second chip may form at least a part of a display driver integrated circuitry (DDI).

According to an embodiment of the disclosure, an electronic device 201 may comprise a display 210, first memory 221, second memory 223, an application processor 231, and an offloading processor 233.

According to an embodiment of the disclosure, storage capacity of the second memory 223 may be less than storage capacity of the first memory 221.

According to an embodiment of the disclosure, the application processor 231 may be configured to identify information associated with power consumption of the first memory 221 and the second memory 223.

According to an embodiment of the disclosure, the application processor 231 may be configured to, based on information associated with the power consumption of the first memory 221 and the second memory 223, identify a memory area in which a plurality of objects displayed in a low power state are stored among the first memory 221 and the second memory 223.

According to an embodiment of the disclosure, the application processor 231 may be configured to store the plurality of objects in the identified memory area.

According to an embodiment of the disclosure, the offloading processor 233 may be configured to, based on information associated with the plurality of stored objects, display the plurality of objects through the display 210 in the low power state.

According to an embodiment of the disclosure, a method of an electronic device 201 may comprise identifying, by an application processor 231 of the electronic device 201, an event for displaying a plurality of objects including a first object and a second object.

According to an embodiment of the disclosure, the method may comprise, based on a memory address corresponding to the first object, displaying, by the application processor 231, the first object stored in first memory 221 of the electronic device 201 through a display 210 of the electronic device 201.

According to an embodiment of the disclosure, the method may comprise, based on a memory address corresponding to the second object, displaying, by the application processor 231, the second object stored in a second memory 223 of the electronic device 201 through the display 210.

According to an embodiment of the disclosure, the method may comprise, based at least in part on an access property of the image data, determining, by the application processor 231, the memory area.

According to an embodiment of the disclosure, the method may comprise providing, by the offloading processor 233, the image data to the display 210 instead of the application processor 231 such that the image data is displayed, at least temporarily, through the display 210 while the electronic device 201 operates in a power saving mode.

According to an embodiment of the disclosure, the method may comprise displaying, by the offloading processor 233 through the display 210, a plurality of objects corresponding to the image data in case that the power saving mode corresponds to a first power saving mode, based on activating the first memory 221 and the second memory 223.

According to an embodiment of the disclosure, the method may comprise displaying, by the offloading processor 233 through the display 210, the plurality of objects corresponding to the image data in case that the power saving mode corresponds to a second power saving mode, based on activating the first memory 221 and deactivating the second memory 223.

According to an embodiment of the disclosure, the method may comprise displaying, by the offloading processor 233 through the display 210, the plurality of objects corresponding to the image data in case that the power saving mode corresponds to a third power saving mode, based on deactivating the first memory 221 and activating the second memory 223.

According to an embodiment of the disclosure, the method may comprise, based on occurrence of an event for setting a screen displayed in a power saving mode, storing, by the application processor 231, image data corresponding to a set screen in the memory area.

According to an embodiment of the disclosure, the method may comprise providing, by the application processor 231, address information corresponding to the memory area to the offloading processor 233 such that the offloading processor 233 accesses the image data stored in the first memory 221 or the second memory 223.

According to an embodiment of the disclosure, the first characteristic of the first memory 221 and the second characteristic of the second memory 223, respectively, may include a first power consumption characteristic and a second power consumption characteristic different from the first power consumption characteristic.

According to an embodiment of the disclosure, the method may comprise, based at least in part on the first power consumption characteristic or the second power consumption characteristic, performing, by the application processor 231, an operation of determining the memory area.

According to an embodiment of the disclosure, a storage medium storing computer-readable instructions may be provided.

According to an embodiment of the disclosure, the instructions, when executed by at least one application processor 231 including processing circuitry of an electronic device 201, may cause the electronic 201 device to perform at least one operation.

According to an embodiment of the disclosure, the at least one operation may comprise identifying an event for displaying a plurality of objects including a first object and a second object.

According to an embodiment of the disclosure, the at least one operation may comprise, based on a memory address corresponding to the first object, displaying the first object stored in first memory 221 of the electronic device 201 through a display 210 of the electronic device.

According to an embodiment of the disclosure, the at least one operation may comprise, based on a memory address corresponding to the second object, displaying the second object stored in a second memory 223 of the electronic device 101 through the display 210.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to an embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

Furthermore, a structure of data used in the above-described embodiment of the disclosure may be recorded on computer-readable recording medium by various means. The computer-readable recording medium includes a magnetic storage medium (e.g., ROM, a floppy disk, a hard disk, and/or the like) and a storage medium such as an optical readable medium (e.g., CD-ROM, a DVD, and/or the like).

So far, the disclosure has been described focusing on preferred embodiments. Those of ordinary skill in the art to which the disclosure pertains will understand that the disclosure may be implemented in a modified form without departing from the essential characteristics of the disclosure. Therefore, the disclosed embodiments should be considered from an explanatory point of view, not a limiting point of view. The scope of the disclosure is shown in the claims, not in the above description, and all differences within the equivalent scope should be construed as being included in the disclosure.

## Claims

1. An electronic device (201) comprising;
a display (210);
first memory (221) with a first characteristic;
second memory (223) with a second characteristic different from the first characteristic;
an application processor (231) configured to determine a memory area to store image data relating to an application; and
an offloading processor (233), wherein the offloading processor (233) is configured to:
identify an event for displaying a plurality of objects, including a first object and a second object, on the display (210),
based on a memory address relating to the first object stored in the first memory (221), display, through the display (210), the first object, and
based on a memory address relating to the second object stored in the second memory (223), display, through the display (210), the second object.

2. The electronic device (201) of claim 1, wherein the application processor (231) is configured to, based at least in part on an access property of the image data, determine the memory area.

3. The electronic device (201) of claim 1 or 2, wherein the offloading processor (233) is configured to provide the image data to the display (210) instead of the application processor (231), such that the image data is displayed, at least temporarily, through the display (210) while the electronic device (201) operates in a power saving mode.

4. The electronic device (201) of any one of claims 1 to 3, wherein the application processor (231) is configured to:
identify at least one of a size of the image data, a task property for the image data, or an access frequency for the image data as the access property,
based at least in part on that the access property corresponds to a first access frequency, determine the first memory (221) as the memory area to store the image data, and
based at least in part on that the access property corresponds to a second access frequency, determine the second memory (223) as the memory area to store the image data.

5. The electronic device (201) of any one of claims 1 to 4, wherein the offloading processor (233) is configured to:
in case that the power saving mode corresponds to a first power saving mode, based on activating the first memory (221) and the second memory (223), display, through the display (210), a plurality of objects corresponding to the image data,
in case that the power saving mode corresponds to a second power saving mode, based on activating the first memory (221) and deactivating the second memory (223), display, through the display (210), the plurality of objects corresponding to the image data, and
in case that the power saving mode corresponds to a third power saving mode, based on deactivating the first memory (221) and activating the second memory (223), display, through the display (210), the plurality of objects corresponding to the image data.

6. The electronic device (201) of any one of claims 1 to 5, wherein the application processor (231) is configured to:
based on occurrence of an event for setting a screen displayed in a power saving mode, store image data corresponding to a set screen in the memory area, and
provide the offloading processor (233) with address information corresponding to the memory area such that the offloading processor (233) accesses the image data stored in the first memory (221) or the second memory (223).

7. The electronic device (201) of any one of claims 1 to 6, wherein the first characteristic of the first memory (221) and the second characteristic of the second memory (223), respectively, include a first power consumption characteristic and a second power consumption characteristic different from the first power consumption characteristic, and
wherein the application processor (231) is configured to:
based at least in part on the first power consumption characteristic or the second power consumption characteristic, perform an operation of determining the memory area.

8. The electronic device (201) of any one of claims 1 to 7, wherein the application processor (231) is configured to:
further based on first power consumption and second power consumption estimated to be consumed by the first memory (221) and the second memory (223), respectively, for accessing the memory area storing the image data, perform an operation of determining the memory area.

9. The electronic device (201) of any one of claims 1 to 8, wherein operating power consumption of the first memory (221) corresponds to first operating power consumption, and
wherein operating power consumption of the second memory (223) corresponds to second operating power consumption less than the first operating power consumption.

10. The electronic device (201) of any one of claims 1 to 9, wherein idle power consumption of the first memory (221) corresponds to first idle power consumption, and
wherein idle power consumption of the second memory (223) corresponds to second idle power consumption greater than the first idle power consumption.

11. The electronic device (201) of any one of claims 1 to 10, wherein an access speed of the first memory (221) corresponds to a first access speed, and
wherein an access speed of the second memory (223) corresponds to a second access speed higher than the first access speed.

12. The electronic device (201) of any one of claims 1 to 11, wherein the application processor (231) forms at least a part of a first chip, and
wherein the offloading processor (233) forms at least a part of a second chip separate from the first chip,
wherein the first memory (221) is disposed outside the first chip and the second chip, and
wherein the second memory (223) is disposed inside the second chip.

13. The electronic device (201) of any one of claims 1 to 12, wherein the display (210) further includes display driver integrated circuitry (DDI), and
wherein the second chip is formed separately from the DDI.

14. A method of an electronic device (201), the method comprising:
identifying, by an offloading processor (233) of the electronic device (201), an event for displaying a plurality of objects including a first object and a second object;
based on a memory address corresponding to the first object, displaying, by the offloading processor (233), the first object stored in first memory (221) of the electronic device (201) through a display (210) of the electronic device (201), and
based on a memory address corresponding to the second object, displaying, by the offloading processor (233), the second object stored in a second memory (223) of the electronic device (201) through the display (210).

15. A storage medium storing computer-readable instructions, the instructions, when executed by an application processor (231) including processing circuitry of an electronic device (101), causing the electronic device (201) to perform at least one operation,
wherein the at least one operation comprises:
identifying an event for displaying a plurality of objects including a first object and a second object;
based on a memory address relating to the first object, displaying the first object stored in first memory (221) of the electronic device (201) through a display (210) of the electronic device (201), and
based on a memory address relating to the second object, displaying the second object stored in a second memory (223) of the electronic device (201) through the display (210).
